# EUROPEAN PATENT APPLICATION

(11) **EP 1 128 706 A1**
(43) Date of publication of application: **29.08.2001**
(21) Application number: 00946338.1
(22) Date of filing: 14.07.2000
(51) Int. Cl.: H04S 1/00, H04R 5/033, A63F 13/00, A63F 13/08

(54) **SOUND ADDER AND SOUND ADDING METHOD**

(30) Priority: 15.07.1999 JP 20186699
(71) Applicant: Sony Corporation, Tokyo 141-0001 (JP)
(72) Inventor: SAOYAMA, Hiroyuki, Sony Corporation, Tokyo 141-0001 (JP); HIRAI, Takahiro, Sony Corporation, Tokyo 141-0001 (JP); KUBOTA, Kazunobu, Sony Corporation, Tokyo 141-0001 (JP)
(74) Representative: Nicholls, Michael John
(86) International application number: JP0004747
(87) International publication number: WO0106813

(57) **Abstract**

It is an object of the present invention to obtain sounds approaching the head of the operator or voices as if whispered into operator's ears, and to thereby enable the operator to play games more effectively.

In a game machine comprising a processor (2) including a main CPU, a controller (3) operated by an operator, an image output terminal (4), a voice output terminal (5), and a function extension terminal (7), in which the contents, images, voices, etc. are changed by the operation of this controller (3) by an operator, an audio output adapter (8) equipped with an audio output function is connected to the function extension terminal (7) and an audio signal (S3) from this audio output adapter (8) is supplied to a headphone (9).

## Description

### TECHNICAL FIELD

The present invention relates to a sound effector and sound effecting method and is intended to improve sound effects.

### BACKGROUND ART

In recent years, in a video game machine comprising a processor unit including a main central processing unit (CPU) comprising a microcomputer, a controller operated by an operator, an image output terminal, and an audio output terminal, wherein the controller is operated by the operator to vary contents, images, audio data and the like, processing to increase the speed of processing capabilities as well as presence of images and audio data, and various kinds of processing which brings virtual reality to reality have been made available.

In processing audio data, processing for increasing presence and reality is being carried out not only by sound volume processing but also by various techniques such as adding reverberation sound, etc.

However, in a conventional game machine, a reproduction device to output audio data is a speaker installed in a TV receiver that provides the audio signal supplied by this game machine or a speaker of a stereo, but the audio output from this game machine is provided only by right and left stereo channels and stereophonic sound, for example, voice whispering in the operator's (listener's) ear (for example, advice about the game) or voice that can be heard from behind the operator (sound close to the operator's head) is unable to be obtained, causing an inconvenience in that the game is unable to be played more effectively.

In view of the foregoing,it is an object of the present invention to provide sound close to the operator's head or voice whispering in the operator's ear and to create greater presence and reality than ever by the reproduced sound so that a game is played more effectively.

### DISCLOSURE OF INVENTION

The sound effector according to the present invention comprises a transmission function calculating means for supplying control information that expresses an audio signal and a position and/or sound volume of this audio signal as well as for controlling a level and/or transmission function with respect to the above audio signal according to the control information, wherein the output of the transmission function calculating means is supplied to a headphone.

By the video game machine which has the contents, images, voices, etc. varied by its controller operated by an operator, the sound signal and the control information of the sound signal varied according to the control signal from the controller are supplied.

According to the present invention as described above, since the audio output adapter which has the audio output function is connected to the function extension terminal of a game machine, the function extension terminal outputting the sound signal and control information, and the audio signal from this audio output adapter is supplied to the headphone, the operator is able to obtain sound close to the operator's head as well as voice whispering in the operator's ear in addition to regular sound provided from right and left stereo channels of speakers disposed ahead. Therefore, greater presence than ever and reproduced sound with special effect are obtained the sound effects of a game are improved and the game can be played more effectively.

### BRIEF DESCRIPTION OF DRAWINGS

FIG. 1 is a block diagram showing one example of the embodiments according to the present sound effector.
FIG. 2 is a functional block diagram showing an example of essential part of FIG. 1.
FIG. 3 is a diagram used for explaining one example of the embodiments of the present invention.
FIG. 4 is a diagram used for explaining another example of the embodiments of the present invention.

### BEST MODE FOR CARRYING OUT THE INVENTION

Referring now to the drawings, embodiments of the sound effector according to the present invention will be described in detail hereinafter.

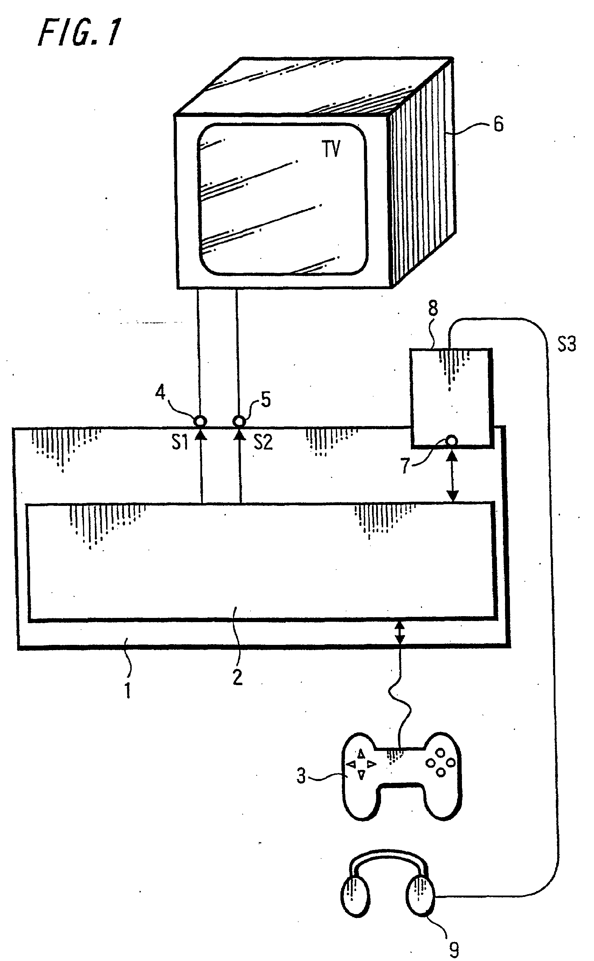

To explain these embodiments, audio output supplying source is assumed to be a so-called video game machine. In FIG. 1, reference numeral 1 denotes a game machine proper, and the game machine proper 1 comprises a processor unit 2 including a main CPU comprising a microcomputer in this game machine proper 1 as well as desired game software stored in a disk, memory, etc.

To the processor unit 2 of the game machine proper 1, a controller 3 which an operator operates is connected. By operating the controller 3, the operator is able to proceed with a game.

Some game machines supply a driving signal from the processor unit 2 to a vibration generator included in the controller 3 (not shown) as proceeding with a game to thereby provide body sensation effect.

In proceeding with a game, the processor unit 2 inside the game machine proper 1 outputs an image signal S1 and an audio signal S2 to an image output terminal 4 and an audio output terminal 5, respectively, as the operator operates the controller 3 and the game runs. Some game machines have the image output terminal 4 and the audio output terminal 5 together to compose an "AV output terminal" and so on, which appears one terminal.

The image output terminal 4 and the audio output terminal 5 of the game machine proper 1 are connected to an image input terminal and an audio input terminal of a TV receiver 6, respectively, so that the image and audio data of the game are able to be obtained by the TV receiver 6, and the operator is able to proceed with the game by the image and voice of the TV receiver 6.

As described above, it is of course possible for the audio signal S2 from the audio output terminal 5 to be reproduced not from a speaker incorporated in the TV receiver 6 but from a speaker connected to a stereo apparatus which is prepared somewhere else and to which the audio signal S2 is supplied.

The game machine proper 1 is generally equipped with a function extension terminal 7. One of the objects of the function extension terminal 7 is to play match-play type games by connecting other game machines or by connecting the equipment with functions such as modem, etc. to connect to telephone line, internet and the like to carry out on-line communications with the outside. For example, in order to communicate with another game machine and proceed with a game, a player transmits positions and attributes of objects in the game through the function extension terminal 7 to the game machine of the communication mate. Similarly, In order to enable audio communication with another game machines, the audio signal S2 may be outputted from the function extension terminal 7.

In the present example, an audio output adapter 8 with audio output functions is connected to the function extension terminal 7 and an audio signal S3 from the audio output adapter 8 is supplied to a headphone 9 that is intended to be worn by the operator to reproduce the audio signal.

Examples of the audio output adapter 8 include a D-A converter that converts a digital signal to an analog signal, or a signal processing circuit that processes the digital signal and a D-A converter that converts the signal to an analog signal.

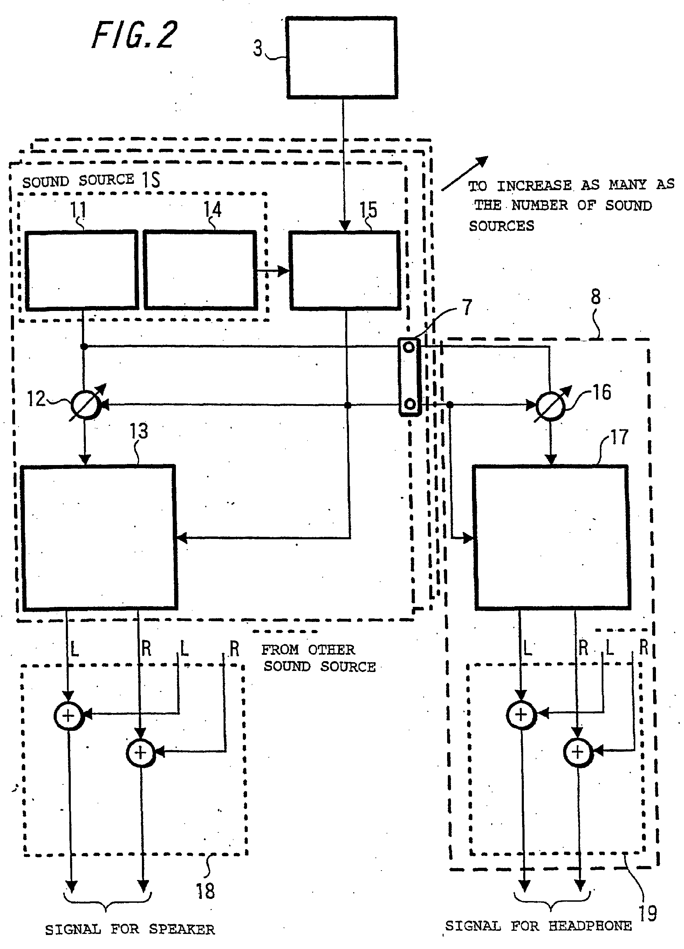

The audio signal S2 for the speaker of the TV receiver 6 which is supplied from the game machine proper 1 to the audio output terminal 5 is obtained as follows. As shown in the function block diagram of FIG. 2, a sound source of game software 1S is composed of its sound signal 11 and related location information (direction and distance) of the sound source 1S and control information 14 including volume information. The sound signal 11 is supplied to a transfer function computing unit 13 for the speaker via an attenuator 12, the control information 14 is supplied a controller 15, control signal obtained on the output side of this controller 15 controls an attenuated amount of the attenuator 12 and computation of the transfer function computing unit 13, and an output signal of this transfer function computing unit 13 is supplied to the audio output terminal 5 as the signal S2 for the speaker. The controller 3 is connected to the controller 15, so that the control information 14 of the sound source 1S is relatively varied to be obtained as a control signal by operator's operation of the controller 3. When the controller 3 is not operated, the attenuator 12 and the transfer function computing unit 13 are controlled according to the control information 14. When the controller 3 is operated, the attenuator 12 and the transfer function computing 13 are controlled by the varied control signal corresponding to the operation, and the audio signal S2 for the speaker is generated.

In the present embodiment, the sound signal 11 from the sound source 1S of this game software is supplied to a transfer function computing unit 17 for the headphone via an attenuator 16 as shown in FIG. 2, and at the same time, an attenuated amount of the attenuator 16 and computation by the transfer function computing unit 17 for the headphone is controlled by the attenuated amount of the attenuator 16 and a control signal of the transfer function computing unit 17 for the headphone, and by a control signal of the controller 15 controlled by the control information 14 including the direction and the distance of the sound source varied by the operation of the controller 3, and an output signal of this transfer function computing unit 17 is supplied to the function extension terminal 7 as a headphone signal.

In this case, if there are a plurality of sound sources in game software, the above-mentioned processing are carried out by the number of sound sources, and the results are added by a mixer 18 as shown in FIG. 2, respectively so that a signal for the speaker is obtained. Corresponding to this, also at the audio output adapter 8, a signal for the headphone is obtained by adding at a mixer 19. The above-mentioned processing is carried out by a time division process.

The headphone 9 used by the embodiment may be constructed so as to be able to hear sound from a TV receiver and stereo apparatus like an open-air type headphone, and to reproduce a sound heard as if a sound source exists behind a listener easily. It is of course possible to obtain a similar effect not only by a headphone which is worn at the head of an operator but also by a small speaker put on the shoulders of an operator.

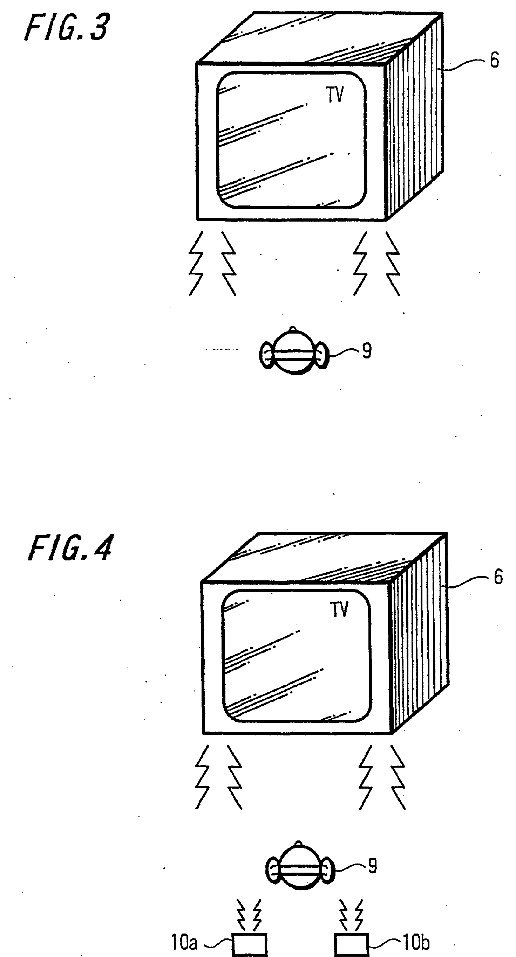

When games are carried out according to the embodiment, an operator wears the headphone 9 as shown in FIG. 3. According to the embodiment, because an audio output adapter 8 with audio output functions is connected to the function extension terminal 7 and the audio signal S3 from this audio output adapter 8 is supplied to the headphone 9, the operator is able to obtain a sound close to the operator's head as well as voice whispering in an operator's ear in addition to the regular sounds of right and left stereo channels from the speakers of the TV receiver 6. Therefore, the sound effects of a game are improved and the game can be played more effectively.

In general, when monaural signals or general stereo music sources are supplied to a headphone and listened, it is the sound image localization (that is, in-head localization) where signals are heard as if they are inside the head. Or, when signals are supplied to one of the channels of the headphone only, the signals are felt as if they sound close to the ear. In the present example, effects of this kind special to the headphone are utilized and sound effects of the game are improved.

In addition, when the sound source is felt as if it sounds close to the ear, the component of the lower register may be enhanced and supplied to the headphone.

Further according to the present example, it is possible to reproduce and create the voice with greater presence than ever by the synthesis of the voice outputted from the speaker of the TV receiver 6 and the voice outputted from the headphone 9 in the space.

Making the voice outputted from the speaker relatively greater than the voice outputted from the headphone 9 localizes the sound image near the speaker ahead and conversely, making the voice outputted from the headphone 9 relatively greater than the voice outputted from the speaker, the sound source is felt as if it is localized near operator's ear or in the vicinity of operator's head. Adjusting this volume difference in conformity to the move of the object in the game makes it possible to achieve acoustic expressions in which the object is gradually coming closer to the operator from ahead.

Or reproducing the voice from the speaker and giving the time delay in which the sound wave reaches to the listener to the headphone reproducing signal S3 can localize the reproduced sound image near the speaker. Consequently, by increasing or decreasing this time delay amount, the sound image localization position can be brought closer or away to and from the listener.

In addition, it may be designed to add special audio signal supplied to this headphone 9 to the game software and this special audio signal is supplied to this headphone 9 via the audio output adapter 8 equipped with the-function extension terminal 7 and the audio output function. In this event, the voice is able to be used appropriately in accordance with applications and scenes of the game, and for example, the voice whispering the advice to the game at operator's ear is able to be obtained, and the voice effects which have never been'obtained before are able to be created.

Similarly, when the drive signal is able to be supplied to the vibration generator equipped at the controller 3 as described above, this drive signal or control signal may be supplied from the function extension terminal 7 to the audio output adapter 8, and when these signals are issued from the game machine, the relative level difference of audio signal of two channels may be varied in a specified cycle or the phase may be varied relatively to provide sound effects to swing the reproduced sound image localization by the headphone.

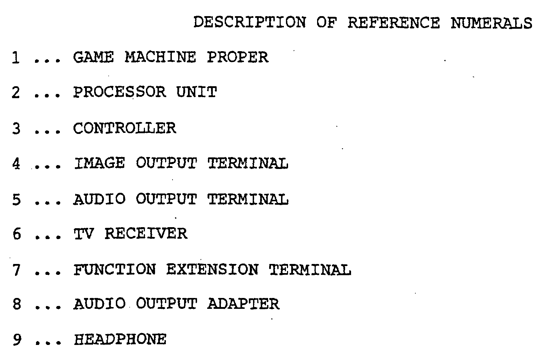

Furthermore, as shown in FIG. 4, rear speakers 10a, 10b may be provided in addition to the headphone 9 which is worn by the operator, an audio signal for the rear speaker may be obtained by the audio output adapter 8 connected with the function extension terminal 7, and the audio signal for the rear speaker may be supplied to the rear speakers 10a, 10b.

Still more, as shown in FIG. 4, if rear speakers 10a, 10b are further provided in addition to the above-mentioned embodiment, the conventional stereo system is able to be expanded to a surround system, and further able to improve the sound effects.

Not only by home video game machines but also by audio devices or AV devices that provide, for example, general stereo music sources, when only the audio signal of two or more channels are given, the listener can listen to the reproduced sound of this audio signal from the speaker ahead and at the same time, may be able to listen to the signal-treated signal by the audio output adapter 8 of the present example from the headphone. In such an event, since the sound source positional information as in the case of the above example is not provided, the position of the sound source and the expansion of the sound image are assumed from the supplied audio signal and are supplied to the headphone with signal treatment.

For example, the level and the interrelation of the supplied two-channel stereo signals are detected or calculated. If both channel signal levels are low, the sound source position is assumed to be far from the listener and the reproduction level of the headphone is set low, and conversely, if levels of both channel signals are high, the sound source position is assumed to be close, and the headphone reproduction level is set high. Or if the interrelation is found to be low as a result of calculating the interrelation with the stereo signal, the sound image is assumed to be expanded and the common-mode components of both channels are canceled each other and supplied to the headphone, and still expanded sound image is thereby able to be obtained. Conversely, because the common-mode components of both channels are originally intended to be localized at the center of the speaker, these are taken out and supplied to the headphone, and the sound image may be able to be set to the position much closer to the listener.

The audio output adapter 8 of the above example is intended to have the audio signal obtained through the function extension terminal 7, but the audio signal S2 for the speaker outputted from the audio output terminal 5 of the video game machine proper 1 is branched, with one supplied to the speaker as it is, and the other supplied to the audio output adapter 8 to be offered for signal processing.

Needless to say, the present invention should not be limited to the above-mentioned example, but other various configurations may be made without departing from the spirit and scope thereof. In addition, the above-mentioned various signal processing may be achieved as hardware or may be naturally achieved as software by microcomputer, DSP, etc.

## Claims

1. A sound effector comprising a transmission function calculating means for supplying control information that expresses an audio signal and a position and/or sound volume of this audio signal as well as for controlling a level and/or transmission function with respect to the above audio signal according to the control information, wherein the output of the above transmission function calculating means is supplied to a headphone.

2. The sound effector according to claim 1, wherein, by the video game machine which has a controller operated by an operator and has contents, images, voices, etc. varied by the controller operated by the operator, the sound signal and the control information of the sound signal varied according to the control signal from the controller are supplied.

3. The sound effector according to claim 2, comprising a connection means for supplying the sound signal and the control information, to which a function extension terminal for outputting the sound signal and the control signal of the video game machine is connected.

4. A sound effector comprising a calculating means for supplying at least two-channel audio signals and calculating the level and/or interrelation for each channel of the audio signal, and
a transmission function calculating means for controlling the level and/or transmission function of the audio signal according to the output of the calculation means, wherein
the output of the transmission function calculating means is supplied to the headphone.

5. A sound effecting method comprising a step for supplying a sound signal and control information that expresses a position and/or volume of the sound signal,
a step for controlling the level and/or transmission function with respect to the sound signal according to the control information, and
a step for supplying the controlled sound signal to the headphone.

6. The sound effecting method according to Claim 5, wherein the control information of the sound signal is changed in accordance with operation of an operator and the sound signal and the changed control information are supplied to the headphone.

7. A sound effecting method comprising a step for reproducing an audio signal of at least two channels from speakers arranged ahead of the listener,
a step for determining the sound image position or expansion of the sound image of the audio signal,
a step for processing the audio signal according to the determined sound image position or sound image expansion, and
a step for reproducing the processed signal from the headphone worn by a listener.
